# FASCICULE DE BREVET EUROPEEN

(11) **EP 1 863 735 B1**
(45) Date de publication et mention de la délivrance du brevet: **03.10.2018**
(21) Numéro de dépôt: 06726286.5
(22) Date de dépôt: 29.03.2006
(51) Int. Cl.: C01B 3/38, C01B 3/48, F23C 10/04, F23L 7/00, B01J 8/06, F23C 10/10, F23C 13/00, F23C 99/00

(54) **DISPOSITIF DE COMBUSTION PRODUISANT DE L'HYDROGENE AVEC REUTILISATION DE CO2 CAPTE**
WASSERSTOFF PRODUZIERENDE VERBRENNUNGSVORRICHTUNG MIT WIEDERVERWENDUNG VON ABGEFANGENEM CO2
COMBUSTION DEVICE THAT PRODUCES HYDROGEN WITH RE-USE OF CAPTURED CO2

(30) Priorité: 01.04.2005 FR 0550858
(43) Date de publication de la demande: 12.12.2007
(73) Titulaire: General Electric Technology GmbH, 5400 Baden (CH)
(72) Inventeur: MORIN, Jean-Xavier, F-45170 Neuville Aux Bois (FR); BEAL, Corinne, F-78690 Voisins Le Bretonneux (FR); SURANITI, Silvestre, F-13100 Aix En Provence (FR)
(74) Mandataire: General Electric Technology GmbH
(86) Numéro de dépôt international: PCT/FR2006/050271
(87) Numéro de publication internationale: WO 2006/103370

(56) Documents cités:
- DE-A1- 2 711 991
- DE-A1- 4 308 803
- FR-A- 2 850 156
- US-A- 5 478 370
- US-B1- 6 494 153
- US-B1- 6 505 567

## Description

La présente invention concerne les centrales de production d'énergie utilisant des combustibles fossiles. Ces centrales produisent des quantités importantes de gaz à effet de serre, notamment du CO₂, qu'il faut contrôler.

Ces contraintes obligent à résoudre à coût réduit et avec le minimum d'impact des problèmes nouveaux comme celui de la capture de CO₂ dans les fumées de centrales tout en incluant l'utilisation d'énergie renouvelable de type biomasse, carbone non fossile par exemple.

Par ailleurs la perspective grandissante de l'épuisement prochain des ressources pétrolières et de leur remplacement nécessaire pour le transport par véhicules, également source importante d'émission de CO₂, amène à rechercher des solutions alternatives pour produire des carburants de substitution, notamment à partir de combustibles non fossiles (biomasse).

D'autre part, la nuit les moyens de production d'électricité sont peu utilisés, ce qui incite à développer des moyens de production de type polygénération.

Afin de réduire la pollution, il est connu de convertir à l'oxygène dilué de CO₂ recyclé les combustibles solides contenant des matières carbonées, plutôt qu'à l'air afin de produire des fumées ne contenant pas d'azote. Il est également connu de convertir par combustion en cycle thermochimique des combustibles solides afin de produire des fumées sans azote. Mais ces dispositifs ne produisent que de l'électricité et sont donc sous utilisés en cas de baisse de production.

Afin de produire un gaz riche en hydrogène destiné notamment à être utilisé par des piles à combustible et pour la production de carburants de transport, il est connu de réaliser un reformage de gaz naturel dans des faisceaux de tubes catalyseurs partiellement immergés dans un lit fluidisé dense. Mais ces systèmes utilisent des combustibles afin de chauffer le lit et de la vapeur d'eau pour produire un gaz de synthèse riche en hydrogène.

US-A-5 478 370 décrit un dispositif de combustion produisant des fumées contenant du CO₂ et de la vapeur d'eau et comprenant une chambre de réaction à bain de métal fondu, des séparateurs et des moyens récupérateur de chaleur dont une partie est disposée dans une zone de régénération exothermique pour régénérer le courant oxydant issu de la chambre de réaction. La partie des moyens récupérateur de chaleur disposée dans la zone de régénération exothermique est constituée de tubes catalytiques pour réformer du gaz naturel.

Le but de l'invention est de proposer un dispositif de conversion d'énergie qui produise à la fois de l'électricité et un gaz de synthèse enrichi en hydrogène d'autre part avec un apport minimum de vapeur d'eau et sans combustible supplémentaire.

Le dispositif de combustion selon l'invention, produit des fumées contenant du CO₂ et de la vapeur d'eau et comprend une chambre de réaction à lit fluidisée circulant, un séparateur, des moyens récupérateur de chaleur dont une partie est disposée dans un lit fluidisé dense, il est caractérisé en ce que la partie disposée dans le lit des moyens récupérateur de chaleurs est constitués de tubes catalytiques parcourus par un mélange de gaz. Le gaz introduit est composé de gaz naturel et/ou de naphte ou du gaz de raffinerie ou de deux ou de plusieurs de ces gaz, ce gaz sera désigné par "gaz à réformer". Le gaz subit un reformage qui le transforme en gaz de synthèse contenant de l'hydrogène. Le fait de disposer les tubes catalytiques dans le lit fluidisé dense constitué par les cendres issues de la combustion permet de réchauffer le catalyseur de façon homogène et de favoriser la réaction de réformage du mélange de gaz.

On utilise du CO₂ recyclé depuis les fumées de combustion pour être mélangé au gaz à réformer et l'introduire dans les tubes catalytiques. En effet, la combustion des combustibles solides à contenu carboné produit du CO₂, qui peut être utilisé pour le reformage du mélange de gaz selon les formules suivantes:

CH₄ + 2CO₂ -> 3 CO + H₂ + H₂O

CH₄ + 3CO₂ -> 4CO + 2H₂O.

Cette dernière réaction incorpore un maximum de CO₂ par rapport au CH₄ ce qui permet de minimiser la quantité de CH₄ utilisée et d'atteindre un mélange CO/H₂ optimum. Le reformage du mélange de gaz se fait donc par la combinaison des réactions avec le CO₂ et la vapeur d'eau.

On utilise également la vapeur d'eau présente dans les fumées de combustion des combustibles solides carbonés qui est recyclée dans les tubes catalytiques. Le reformage du mélange de gaz se fait selon les formules suivantes:

CH₄ +2 H₂O -> CO₂ +4H₂

CH₄ + H₂O -> CO + 3H₂.

Après les tubes catalytiques, le gaz de synthèse part vers des moyens de production d'hydrogène qui comprennent une étape de réaction de gaz à l'eau qui augmente encore la teneur en hydrogène. Cette étape se caractérise par la réaction suivante:

CO + H₂O -> CO₂ + H₂.

Cette réaction de gaz à l'eau est particulièrement intéressante car elle permet en utilisant la vapeur d'eau produite par la combustion, complétée si besoin par le taux de transformation requis de CO pour aboutir à un certain ratio C/H dans le gaz de synthèse, de convertir totalement le CO produit en CO₂ et H₂ avant la séparation ultérieure du CO₂ et de l'hydrogène.

Selon une première variante, la combustion est une combustion à l'air, c'est à dire que le combustible solide est brûlé dans l'air, les fumées comprennent donc principalement du CO₂ dilué dans de l'azote.

Selon une seconde variante, la combustion est une combustion à l'oxygène, le combustible est brûlé avec de l'oxygène produit ou non par le dispositif. Les fumées ne comprennent ici que des traces d'azote, le mélange est constitué d'environ 75% de CO₂ et 25% de H₂O.

Selon une troisième variante, la combustion est une combustion en cycle thermochimique, c'est à dire que la combustion se fait grâce à un oxyde métallique qui est successivement oxydé dans un réacteur d'oxydation et réduit dans la chambre de combustion. Les fumées produites par la combustion sont composées de 55% de CO₂ et de 45% de H₂O.

La combustion en cycle thermochimique utilise un oxyde métallique, pour le transfert de l'oxygène.

L'oxyde métallique utilisé dans la combustion en cycle thermochimique est utilisé comme catalyseur dans les moyens de production d'hydrogène. Il n'est donc pas nécessaire d'introduire de catalyseur supplémentaire dans le dispositif.

Cet oxyde métallique est un oxyde de fer. Ce catalyseur agit à 700/950 °C

Les tubes catalytiques sont composé en partie d'oxyde de nickel, pour réagir avec le mélange de gaz. Ce catalyseur doit être à 750/950°C pour réagir, il est réchauffé dans le lit fluidisé dont la température est d'environ 750 à 950°C.

Le gaz parcourrant les tubes catalytiques est sous pression. Ce qui permet de réduire le volume du réacteur et par conséquent les volumes des tubes, et compense les pertes de charges.

Préférablement, le lit dense est placé à l'extérieur de la chambre de combustion. Ceci améliore la flexibilité d'adaptation du dispositif vis à vis de la production de gaz de synthèse grâce à un lit de plus grande taille.

En variante, le lit dense est placé le long des parois de la chambre de réaction. Les tubes sont ainsi disposés sur le pourtour du périmètre du bas de la chambre. On peut ainsi disposer de surfaces supplémentaires de tubes de reformage. Dans ce cas, l'alimentation du lit fluidisé contenant les tubes de reformage est faite par des solides descendants recueillis le long des parois de la chambre de combustion, ce qui permet d'augmenter les performances de l'installation dans son ensemble lorsque celle-ci est à charge partielle et d'abaisser sa charge minimum. Cette configuration est particulièrement avantageuse, car il n'y a plus besoin de recourir uniquement à des solides soutirés de la circulation externe dont la quantité varie fortement en fonction de la charge de la chambre de combustion en particulier à faible charge.

Au moins une partie des tubes catalytiques sont disposés dans les solides. L'utilisation de particules pour réchauffer le catalyseur est d'un meilleur rendement car les solides assurent un meilleur mouillage thermique des tubes. L'utilisation des solides plutôt que du gaz pour les échanges thermiques permet d'utiliser une surface de reformage plus faible, par conséquent moins de tubes sont nécessaires et un lit plus compact. Le réglage possible du débit des solides alimentant le lit dense permet un ajustage de la température des tubes et donc de la cinétique de reformage.

Une partie des tubes catalytiques sont disposés au-dessus des solides. Cela permet d'augmenter la surface des tubes disponibles.

Selon une variante, une partie des tubes sont disposés sur la sole de la chambre de réaction. Le placement des tubes de reformage sur la sole de la chambre est possible puisque la rigidité de la sole réduit les contraintes mécaniques sur les tubes qui peuvent alors être de grande longueur.

Les tubes catalytiques sont formés de tubes de grande longueur supportés par des plaques intermédiaires. Dans le lit dense, on dispose des plaques intérimaires pour supporter les tubes de reformage de grande longueur.

Selon une variante, les plaques intermédiaires sont refroidies. On peut ainsi garantir la pérennité des tubes.

Selon une variante, les tubes catalytiques sont constitués de tubes de petite longueur avec des caissons intermédiaires. Dans ce cas, les tubes peuvent être disposés en série ou en parallèle.

L'invention sera mieux comprise à la lecture de la description qui va suivre donnée uniquement à titre d'exemple et faite en se référant aux dessins annexés dans lesquels :
- la figure 1 est une vue générale d'une partie d'une première variante du dispositif selon l'invention en cycle thermochimique,
- la figure 2 est une vue générale d'une partie d'une deuxième variante du dispositif selon l'invention avec combustion à l'oxygène,
- la figure 3 est une vue générale d'une partie d'une troisième variante du dispositif selon l'invention avec combustion à l'air,
- la figure 3a est une vue générale d'une partie d'une variante de la troisième variante du dispositif de la figure 3,
- la figure 4 est une vue de dessus du lit selon une première variante du lit,
- la figure 5 est une vue de dessus du lit selon une seconde variante du lit,
- la figure 6 est une vue de dessus du lit selon une troisième variante du lit,
- la figure 7 est une vue en coupe du lit selon une première disposition des tubes catalytiques,
- la figure 8 est une vue en coupe du lit selon une deuxième disposition des tubes catalytiques,
- la figure 9 est une vue en coupe du lit selon une troisième disposition des tubes catalytiques.

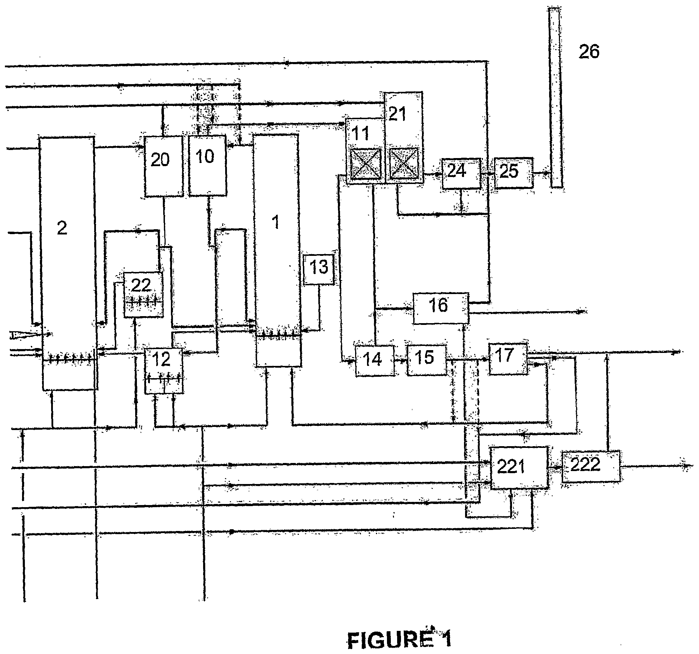

Le dispositif, représenté en partie seulement à la figure 1, est un dispositif de combustion en cycle thermochimique. Il comprend une chambre de combustion 1 et une chambre d'oxydation 2.

La chambre de combustion 1 a un cyclone 10 de séparation des solides qui est relié d'une part à une passe arrière 11 et d'autre part à un lit extérieur 12. La chambre 1 est alimentée en combustible depuis un silo 13. Un filtre à manches 14, un ventilateur 15, un récupérateur de cendres et d'oxydes 16 et un poste de traitement CO₂ 17.

La chambre d'oxydation 2 a deux cyclones, dont un seul, référencé 20, est visible sur la figure 1 et qui sont reliés d'une part à une passe arrière 21 et d'autre part à un lit extérieur qui n'est pas visible sur la figure 1. La chambre 2 est alimentée par un silo qui n'est pas visible sur la figure 1. Un filtre à manches 24, un ventilateur de tirage 25 et une cheminée 26 sont placés après la passe arrière 21.

En parallèle, un mélange de gaz, du CO₂ recyclé et de la vapeur d'eau, notamment contenue dans le CO₂ recyclé est introduit dans des tubes catalytiques dans le lit précité où a lieu le reformage du gaz. Le mélange gazeux composé de CO, H₂, CO₂ et H₂O qui en sort est ensuite envoyé vers un réacteur de gaz à l'eau 221 puis un dispositif de purification de l'hydrogène 222. La purification 222 se fait par du solvant, des membranes ou par cryogénie. Le gaz sortant du réacteur 221 est constitué de H₂, CO₂ et H₂O.

Un oxyde métallique circule de la chambre d'oxydation 2, où il est oxydé puis séparé des fumées dans les cyclones précités, une première partie va dans la chambre de combustion 1 où il est réduit, une deuxième partie retourne dans la chambre 2, une troisième partie passe dans le lit fluidisé extérieur précité où la température est contrôlée pour retourner dans la chambre 2, une quatrième partie va vers le réacteur 221 où il sert de catalyseur pour la réaction du gaz à l'eau.

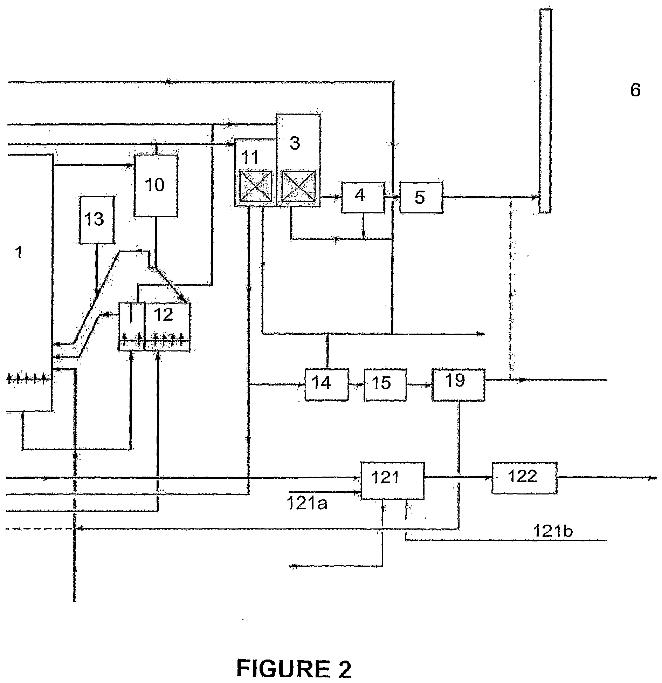

Le dispositif, présenté en partie seulement à la figure 2, est un dispositif de combustion à l'oxygène en lit fluidisé circulant. Il comprend une chambre de combustion 1, un ou plusieurs séparateurs 10, dont un seul est visible sur la figure 2 et qui sont reliés à une passe arrière 11, et un ou plusieurs lits fluidisés qui ne sont pas visibles sur la figure 2. Les fumées sortant de la passe arrière 11 sont transférées vers un filtre à manches 14, un ventilateur 15 puis un condenseur 19 avant le train de compression CO₂ (non représenté).

Le lit précité est fluidisé par de l'air extérieur qui est ensuite refroidi dans une passe arrière séparée 3, puis un filtre à manche 4, un ventilateur 5 et une cheminée 6.

Le lit précité contient des tubes catalytiques parcourus par un mélange de gaz et du CO₂/H₂O recyclés venant de la combustion et sortant de la passe arrière 11. De l'oxygène résiduel (moins de 5%) demeure dans le CO₂/H₂O recyclé et il contribue à l'oxydation partielle du gaz de synthèse produit et favorise sa réaction par l'augmentation de la température du gaz de synthèse indépendamment de la température des solides. Le gaz de synthèse est transféré vers un dispositif de réaction de gaz à l'eau 121 puis un purificateur d'hydrogène 122. Le dispositif de réaction 121 est alimenté en catalyseur de l'extérieur par le conduit 121a et en vapeur par le conduit 121b.

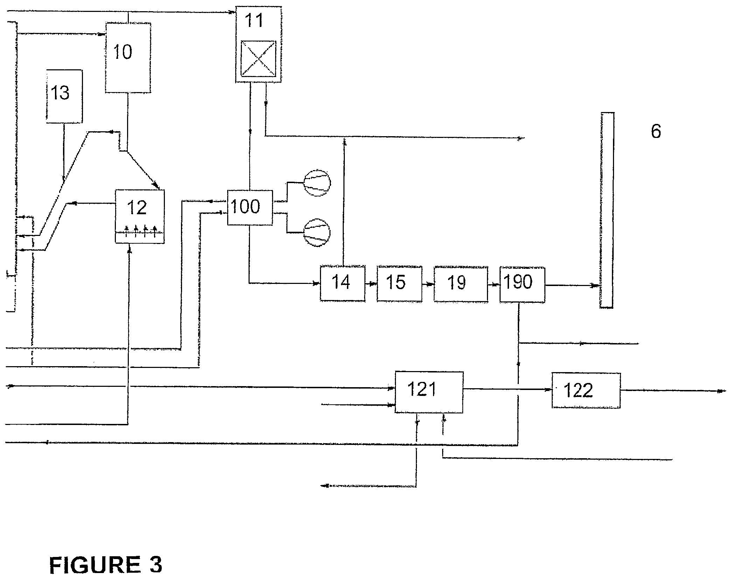

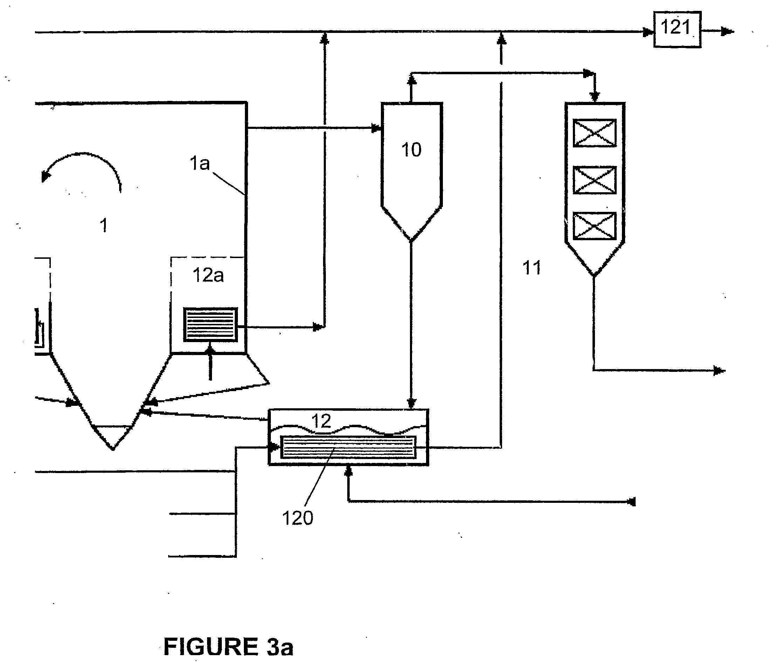

On peut utiliser un dispositif de combustion à l'air classique avec capture de CO₂ par lavage par amines comme représenté en partie seulement à la figure 3. Le lavage aux amines est une technologie classique pour séparer le CO₂ des autres gaz issus de la combustion tel que principalement l'azote. Le dispositif comprend une chambre de combustion, qui n'est pas visible sur la figure 3 et qui est reliée à un ou plusieurs séparateurs 10 dont un seul est visible sur la figure 3. Chaque séparateur 10 est relié à un lit fluidisé extérieur, non visible sur la figure 3, et a un retour vers la chambre précitée. Ce lit est fluidisé par de l'air.

Les fumées sortant du séparateur vont vers une passe arrière 11 où elles sont refroidies, la chaleur restante sert à réchauffer l'air entrant dans la chambre précitée dans un réchauffeur d'air 100. Les fumées comme pour les variantes précédentes vont ensuite vers un filtre à manche 14, un ventilateur 15 puis un condenseur 19 et un laveur aux amines 190. Le CO₂/H₂O est extrait des fumées qui sont ensuite renvoyées dans l'atmosphère via une cheminée 6.

On a placé dans le lit précité des tubes catalytiques, qui ne sont pas visibles sur la figure 3 et dans lesquels un mélange de gaz circule. Le CO₂/H₂O extrait est envoyé dans les tubes précités avec le mélange de gaz afin de réaliser le reformage de ce dernier. Les gaz obtenus vont vers un dispositif de réaction de gaz à l'eau 121 dans lequel on apporte des catalyseurs et de la vapeur d'eau. Une purification est effectuée dans un purificateur 122 sur le gaz afin d'augmenter sa teneur en hydrogène.

Dans la variante, montrée sur la figure 3a, du dispositif de la figure 3, un lit 12a est placé le long des parois 1a de la chambre précitée, qui est référencée 1 sur la figure 3a. Ce lit 12a, à la différence du lit précité du dispositif de la figure 3 qui est référencé 12 sur la figure 3a, est alimenté en solides par les particules descendantes recueillies le long de la paroi 1a de la chambre 1. Il est fluidisé par de l'air.

Le mélange de gaz arrive au niveau de chaque lit 12 et 12a dans des tubes catalytiques 120 disposés dans le lit 12 et dans le lit 12a. Une fois le reformage effectué les gaz repartent vers le dispositif de réaction de gaz à l'eau 121.

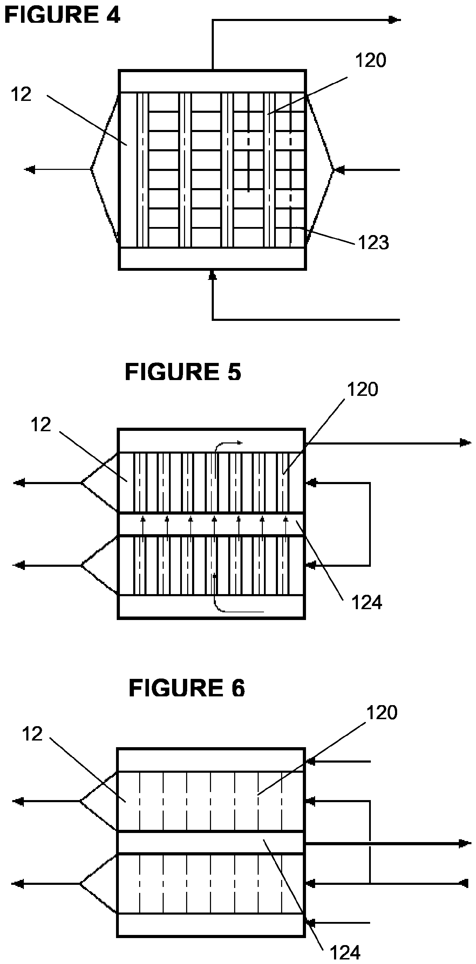

La figure 4 montre des tubes catalytiques 120 de grande longueur disposés dans un lit 12 et soutenus par des plaques intermédiaires 123.

La figure 5 représente un lit 12 avec des tubes catalytiques 120 de petite longueur en parallèle avec des caissons intermédiaires 124. Le mélange de gaz arrive en bas et repart par le haut sur la figure 5.

La figure 6 représente un lit 12 avec des tubes catalytiques 120 de petite longueur en série avec des caissons intermédiaires 124. Le mélange de gaz arrive par le haut et le bas et repart par le milieu sur la figure 6.

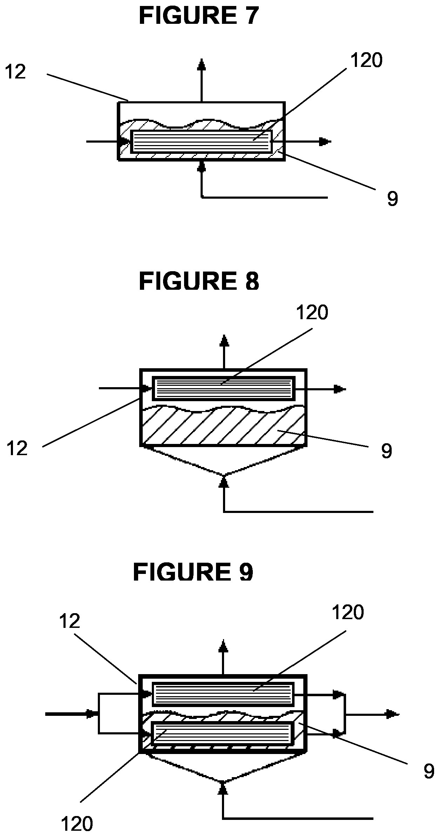

La figure 7 montre les tubes catalytiques 120 placés dans des solides 9.

La figure 8 montre les tubes catalytiques 120 placés au dessus de solides 9.

La figure 9 montre des tubes catalytiques 120 disposés dans des solides 9 et des tubes 120 au dessus des solides 9.

## Revendications

1. Dispositif de combustion produisant des fumées contenant du CO₂ et de la vapeur d'eau et comprenant une chambre de réaction (1, 2) à lit fluidisé circulant, un séparateur (10, 20), des moyens récupérateur de chaleur dont une partie est disposée dans un lit (12, 12a) **caractérisé en ce que** la partie des moyens récupérateur de chaleur disposée dans le lit est constituée de tubes catalytiques (120) parcourus par un mélange de gaz, dit gaz à reformer, et composé de gaz naturel et/ou de naphte ou du gaz de raffinerie ou de deux ou plusieurs de ces gaz, les tubes catalytiques (120) étant destinés à favoriser le reformage du mélange de gaz en un gaz de synthèse contenant de l'hydrogène.

2. Dispositif de combustion selon la revendication 1, **caractérisé en ce que** du CO₂ recyclé à partir des fumées de combustion est mélangé au gaz à reformer et introduit dans les tubes catalytiques (120).

3. Dispositif de combustion selon une des revendications précédentes, **caractérisé en ce que** de la vapeur d'eau est recyclée dans les tubes catalytiques (120).

4. Dispositif de combustion selon une des revendications précédentes, **caractérisé en ce qu'**après les tubes catalytiques (120), le gaz de synthèse part vers des moyens de conversion en hydrogène (121, 122) comprenant une étape de réaction de gaz à l'eau (121).

5. Dispositif de combustion selon une des revendications 1 à 4, **caractérisé en ce que** la combustion est une combustion à l'air.

6. Dispositif de combustion selon une des revendications 1 à 4, **caractérisé en ce que** la combustion est une combustion à l'oxygène.

7. Dispositif de combustion selon une des revendications 1 à 4, **caractérisé en ce que** la combustion est une combustion en cycle thermochimique.

8. Dispositif de combustion selon la revendication 7, **caractérisé en ce que** la combustion en cycle thermochimique utilise un oxyde métallique.

9. Dispositif de combustion selon la revendication 8, **caractérisé en ce que** l'oxyde métallique est utilisé comme catalyseur dans les moyens de production d'hydrogène (121).

10. Dispositif de combustion selon la revendication précédente, **caractérisé en ce que** l'oxyde métallique est un oxyde de fer.

11. Dispositif de combustion selon une des revendications précédentes, **caractérisé en ce que** les tubes catalytiques (120,) sont composé en partie d'oxyde de nickel.

12. Dispositif de combustion selon une des revendications précédentes, **caractérisé en ce que** le gaz parcourant les tubes catalytiques (120) est sous pression.

13. Dispositif de combustion selon une des revendications précédentes, **caractérisé en ce que** le lit (12) est placé à l'extérieur de la chambre de combustion.

14. Dispositif de combustion selon une des revendications précédentes, **caractérisé en ce que** le lit (12a) est placé le long des parois (1a) de la chambre de réaction (1).

15. Dispositif de combustion selon une des revendications précédentes, **caractérisé en ce qu'au** moins une partie des tubes catalytiques (120) est disposée dans des solides.

16. Dispositif de combustion selon la revendication précédente, **caractérisé en ce qu'**une partie des tubes catalytiques (120) est disposée au-dessus des solides.

17. Dispositif de combustion selon une des revendications précédentes, **caractérisé en ce qu'**une partie des tubes (120) sont disposés sur la sole de la chambre de réaction (1).

18. Dispositif de combustion selon une des revendications 1 à 16, **caractérisé en ce que** les tubes catalytiques (120) sont formés de tubes de grande longueur supportés par des plaques intermédiaires (123).

19. Dispositif de combustion selon la revendication précédente, **caractérisé en ce que** les plaques intermédiaires (123) sont refroidies.

20. Dispositif de combustion selon une des revendications 1 à 17, **caractérisé en ce que** les tubes catalytiques (120) sont constitués de tubes de petite longueur avec des caissons intermédiaires (124).

## Patentansprüche

1. Verbrennungsvorrichtung, die Rauche produziert, die CO₂ und Wasserdampf enthalten und die eine Reaktionskammer (1, 2) in Form eines zirkulierenden Wirbelbetts, einen Separator (10, 20), Wärmerückgewinnungsmittel, die teilweise in einem Bett (12, 12a) angeordnet sind, umfasst, **dadurch gekennzeichnet, dass** der im Bett angeordnete Teil der Wärmerückgewinnungsmittel aus katalytischen Rohren (120) besteht, durch die ein Gemisch aus Gas strömt, als Reformiergas bezeichnet und bestehend aus Naturgas und/oder aus Naphtha oder aus Raffineriegas oder aus zwei oder mehreren dieser Gase, wobei die katalytischen Rohre (120) dazu bestimmt sind, das Reformieren des Gasgemischs in ein Synthesegas, das Wasserstoff enthält, zu begünstigen.

2. Verbrennungsvorrichtung nach Anspruch 1, **dadurch gekennzeichnet, dass** aus Verbrennungsrauchen wiederverwertetes CO₂ mit dem Reformiergas gemischt und in die katalytischen Rohre (120) eingeführt wird.

3. Verbrennungsvorrichtung nach einem der vorstehenden Ansprüche, **dadurch gekennzeichnet, dass** der Wasserdampf in den katalytischen Rohren (120) wiederverwertet wird.

4. Verbrennungsvorrichtung nach einem der vorstehenden Ansprüche, **dadurch gekennzeichnet, dass** das Synthesegas nach den katalytischen Rohren (120) zu den Umwandlungsmitteln zu Wasserstoff (121, 122) weiterströmt, umfassend eine Etappe der Reaktion von Gas auf Wasser (121).

5. Verbrennungsvorrichtung nach einem der Ansprüche 1 bis 4, **dadurch gekennzeichnet, dass** die Verbrennung eine Luftverbrennung ist.

6. Verbrennungsvorrichtung nach einem der Ansprüche 1 bis 4, **dadurch gekennzeichnet, dass** die Verbrennung eine Sauerstoffverbrennung ist.

7. Verbrennungsvorrichtung nach einem der Ansprüche 1 bis 4, **dadurch gekennzeichnet, dass** die Verbrennung eine Verbrennung in thermochemischem Zyklus ist.

8. Verbrennungsvorrichtung nach Anspruch 7, **dadurch gekennzeichnet, dass** die Verbrennung in thermochemischem Zyklus ein Metalloxid verwendet.

9. Verbrennungsvorrichtung nach Anspruch 8, **dadurch gekennzeichnet, dass** das Metalloxid als Katalysator in den Herstellungsmitteln von Wasserstoff (121) verwendet wird.

10. Verbrennungsvorrichtung nach dem vorstehenden Anspruch, **dadurch gekennzeichnet, dass** das Metalloxid ein Eisenoxid ist.

11. Verbrennungsvorrichtung nach einem der vorstehenden Ansprüche, **dadurch gekennzeichnet, dass** die katalytischen Rohre (120) teilweise aus Nickeloxid bestehen.

12. Verbrennungsvorrichtung nach einem der vorstehenden Ansprüche, **dadurch gekennzeichnet, dass** das Gas, das durch die katalytischen Rohre (120) strömt, unter Druck steht.

13. Verbrennungsvorrichtung nach einem der vorstehenden Ansprüche, **dadurch gekennzeichnet, dass** das Bett (12) außerhalb der Verbrennungskammer angeordnet ist.

14. Verbrennungsvorrichtung nach einem der vorstehenden Ansprüche, **dadurch gekennzeichnet, dass** das Bett (12a) entlang der Wände (1a) der Reaktionskammer (1) angeordnet ist.

15. Verbrennungsvorrichtung nach einem der vorstehenden Ansprüche, **dadurch gekennzeichnet, dass** mindestens ein Teil der katalytischen Rohre (120) in Festkörpern angeordnet ist.

16. Verbrennungsvorrichtung nach dem vorstehenden Anspruch, **dadurch gekennzeichnet, dass** ein Teil der katalytischen Rohre (120) oberhalb der Festkörper angeordnet ist.

17. Verbrennungsvorrichtung nach einem der vorstehenden Ansprüche, **dadurch gekennzeichnet, dass** ein Teil der katalytischen Rohre (120) auf dem Boden der Reaktionskammer (1) angeordnet ist.

18. Verbrennungsvorrichtung nach einem der Ansprüche 1 bis 16, **dadurch gekennzeichnet, dass** die katalytischen Rohre (120) aus Rohren großer Länge geformt sind, die durch Zwischenplatten (123) gestützt werden.

19. Verbrennungsvorrichtung nach dem vorstehenden Anspruch, **dadurch gekennzeichnet, dass** die Zwischenplatten (123) abgekühlt werden.

20. Verbrennungsvorrichtung nach einem der Ansprüche 1 bis 17, **dadurch gekennzeichnet, dass** die katalytischen Rohre (120) aus Rohren kleiner Länge mit Zwischenkasten (124) bestehen.

## Claims

1. Combustion device which produces fumes containing CO₂ and steam and comprising a circulating fluidised bed reaction chamber (1, 2), a separator (10, 20), heat recovering means of which one portion is arranged in a bed (12, 12a) **characterised in that** the portion of the heat recovering means arranged in the bed is comprised of catalytic tubes (120) travelled through by a gas mixture, referred to as gas to be reformed, and comprised of natural gas and/or naphtha or refinery gas or of two or more of these gases, with the catalytic tubes (120) being intended to favour the reforming of the mixture of gas into a synthesis gas containing hydrogen.

2. Combustion device according to claim 1, **characterised in that** CO₂ recycled from combustion fumes is mixed with the gas to be reformed and introduced into the catalytic tubes (120).

3. Combustion device according to one of the preceding claims, **characterised in that** steam is recycled in the catalytic tubes (120).

4. Combustion device according to one of the preceding claims, **characterised in that** after the catalytic tubes (120), the synthesis gas exits towards the means for converting into hydrogen (121, 122) comprising a step of reacting the gas with water (121).

5. Combustion device according to one of claims 1 to 4, **characterised in that** the combustion is a combustion with air.

6. Combustion device according to one of claims 1 to 4, **characterised in that** the combustion is a combustion with oxygen.

7. Combustion device according to one of claims 1 to 4, **characterised in that** the combustion is a combustion in a thermochemical cycle.

8. Combustion device according to claim 7, **characterised in that** the combustion in a thermochemical cycle uses a metal oxide.

9. Combustion device according to claim 8, **characterised in that** the metal oxide is used as a catalyst in the means for producing hydrogen (121).

10. Combustion device as claimed in the preceding claim, **characterised in that** the metal oxide is an iron oxide.

11. Combustion device according to one of the preceding claims, **characterised in that** the catalytic tubes (120) are partially comprised of nickel oxide.

12. Combustion device according to one of the preceding claims, **characterised in that** the gas travelling through the catalytic tubes (120) is under pressure.

13. Combustion device according to one of the preceding claims, **characterised in that** the bed (12) is placed outside the combustion chamber.

14. Combustion device according to one of the preceding claims, **characterised in that** the bed (12a) is placed along the walls (1a) of the combustion chamber (1).

15. Combustion device according to one of the preceding claims, **characterised in that** at least a portion of the catalytic tubes (120) is arranged in the solids.

16. Combustion device as claimed in the preceding claim, **characterised in that** a portion of the catalytic tubes (120) is arranged above the solids.

17. Combustion device according to one of the preceding claims, **characterised in that** a portion of the tubes (120) is arranged on the sole of the combustion chamber (1).

18. Combustion device according to one of claims 1 to 16, **characterised in that** the catalytic tubes (120) are formed from tubes with a great length supported by intermediate plates (123).

19. Combustion device as claimed in the preceding claim, **characterised in that** the intermediate plates (123) are cooled.

20. Combustion device according to one of claims 1 to 17, **characterised in that** the catalytic tubes (120) are comprised of tubes of a short length with intermediate caissons (124).
